# EUROPEAN PATENT SPECIFICATION

(11) **EP 0 682 435 B1**
(45) Date of publication and mention of the grant of the patent: **13.01.1999**
(21) Application number: 95201384.5
(22) Date of filing: 01.08.1991
(51) Int. Cl.: H05K 5/00, H04Q 1/02, H02G 15/117, H01R 13/52, H01R 23/02

(54) **Enclosure for telecommunications equipment**
Gehäuse für Telekommunikationsausrüstung
Boîtier pour installations de télécommunication

(30) Priority: 04.09.1990 US 579006; 17.09.1990 US 584325
(43) Date of publication of application: 15.11.1995
(62) Divisional of application: 91914225.7
(73) Proprietor: RAYCHEM CORPORATION (a Delaware corporation), Menlo Park, California 94025 (US)
(72) Inventor: Bliven, David C., San Jose, California 95129 (US); Vranicar, Anthony, Santa Clara, California 95051 (US); Vail, Philip B., San Leandro, California 94578 (US); Shimirak, Gerald L., Danville, California 94526 (US); Mullaney, Julian S., Raleigh, North Carolina 27612 (US); Erreygers, Jan J., B-2180 Kalmhout (BE)
(74) Representative: Benson, John Everett

(56) References cited:
- EP-A- 0 101 610
- EP-A- 0 143 616
- EP-A- 0 204 675
- EP-A- 0 382 646
- WO-A-91/01600
- DE-A- 3 823 925
- GB-A- 2 064 270
- NL-A- 7 510 026
- US-A- 4 562 311
- US-A- 4 800 588
- US-A- 4 874 333
- US-A- 4 949 376
- PROCEEDINGS OF THE INTERNATIONAL SWITCHING SYMPOSIUM - SESSION 31A PAPER 4, vol. 2, 7 - 11 May 1984, FLORENCE(IT), pages 1-6, XP002002873 S.YOKOTA ET AL: "MAINTENANCE AND TEST FOR THE DIGITAL SWITCHING SYSTEM D70(D) AND SUBSCRIBER LINES"
- REVIEW OF THE ELECTRICAL COMMUNICATION LABORATORIES - PART 2, vol. 32, no. 2, 1984, TOKYO JP, pages 307-315, XP002002874 R.SHIMAKAGE ET AL: "MAINTENANCE SYSTEM FOR DIGITAL LOCAL NETWORK"
- IEEE TRANSACTIONS ON COMMUNICATIONS, vol. 29, no. 10, October 1981, NEW YORK US, pages 1434-1441, XP002002875 T.A.HANRAHAN ET AL: "SUBSCRIBER LINE TESTING FOR DIGITAL SWITCHING OFFICES"
- IBM TECHNICAL DISCLOSURE BULLETIN, vol. 16, no. 7, December 1973, NEW YORK US, pages 2146-2147, XP002002876 D.E.FISK ET AL: "BALANCED ELECTRONIC HYBRID CIRCUITS WITH LINE MATCHING IMPEDORS"

## Description

The present invention relates to mechanical enclosures for telephone line equipment.

Limitations with the mechanical enclosures for telephone equipment at customer facilities have been encountered. Some enclosures have provided insufficient weather protection. Some enclosures have provided only limited access to frequently used components, have been excessively complex, utilize expensive components or fabrication techniques, or combinations of the above.

United States Patent No. 4,949,376 discloses a telephone network interface apparatus including a base and a wall circumscribing the base and extending outwardly therefrom, the base and wall cooperatively providing an open compartment having a telephone company compartment portion and a subscriber compartment portion; the telephone company compartment portion is for having a plurality of pairs of telephone company terminals mounted therein for connection to a plurality of subscriber premises lines. A telephone company cover is included and is closed over the telephone company compartment portion. A subscriber cover is also included and is mounted pivotally to the telephone company cover and for being closed and fastened over the subscriber compartment portion; second fastening means are included for fastening the subscriber cover closed over the subscriber compartment portion.

United States Patent No.4,800,588 discloses a network interface unit which includes a two compartment housing and a pair of commonly hinged covers. The outer cover protects the entire network interface and other telephone utility circuits from the weather, while the inner cover prevents the customer from accessing telephone utility company circuits. The outer cover may be locked in the closed position to the inner cover, and the inner cover is independently secured to the rear of the housing so that authorized telephone technicians can gain access to both compartments without the need to detach the outer and inner covers from one another and without the need to open a customer supplied padlock. The network interface unit housing provides a variety of component mounting structures enabling the housing to hold a variety of different modular components.

According to the present invention, there is provided an enclosure for telecommunications equipment, comprising:
a) a frame, said frame defining a telephone line region comprising telephone line connections; and
b) a sealed components case, said sealed components case enclosing at least one electronics component for processing signals from and to said telephone line connections;
characterised in that said components case is attachable to said frame with a socket and plug assembly.

The present invention provides an improved enclosure for a remote terminal. The enclosure includes a modular, sealed case for electronic components, preferably mounted on one or more circuit boards. The sealed case is preferably downwardly facing and mounted on a second enclosure. The second enclosure includes a first, user-accessible section and a second, restricted-access section. The user-accessible section is covered by a first door and the restricted access section is covered by a door having a limited access closure device such as a protected fastener, lock, one-way screw, or the like.

A further understanding of the nature and advantages of the invention may be had with reference to the following figures and description.

### BRIEF DESCRIPTION OF THE FIGURES

Fig. 1 is an isometric drawing illustrating the RT (Remote Terminal) housing in a closed position;
Fig. 2 is an isometric view of the RT housing with open access doors; and
Fig. 3 is a detailed front view of one embodiment of the customer and telephone company equipment compartments.

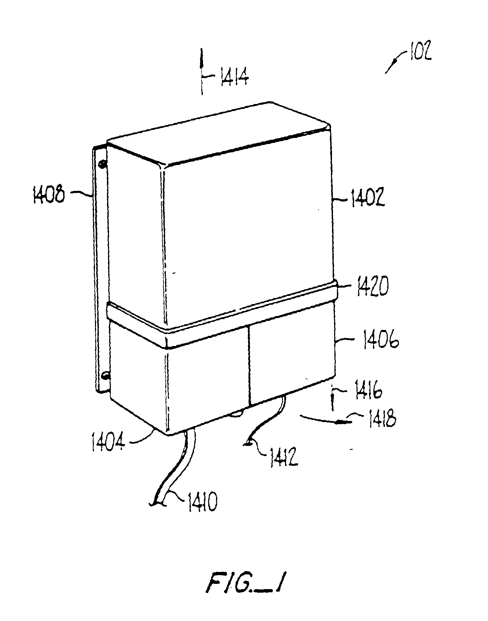

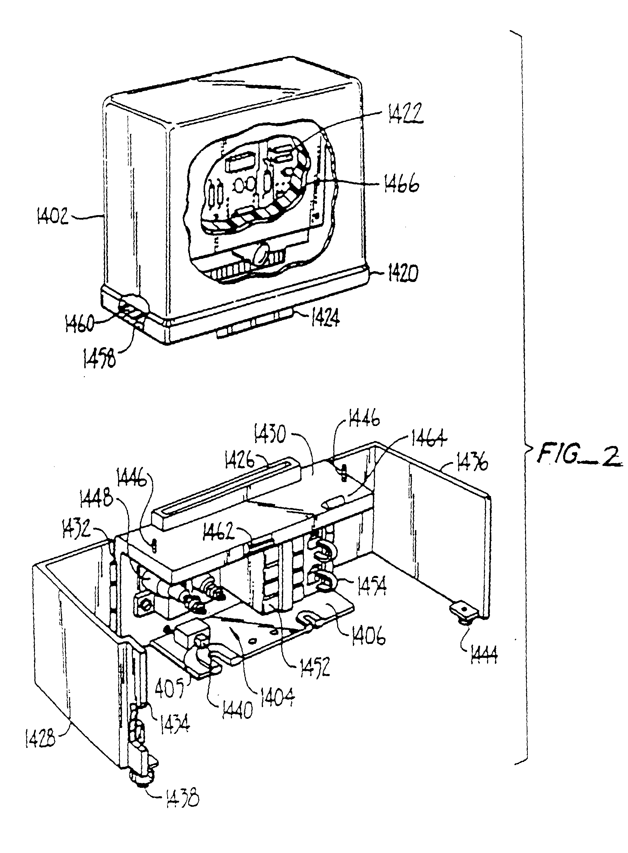

The RT electronics will often be located in an unprotected environment at a user location. Access to various portions of the RT is desirably limited. Figs. 1 and 2 illustrate an enclosure which will find particular application with the RT disclosed herein.

As shown in Fig. 1, the enclosure includes an RT electronics case 1402, a telephone company equipment compartment 1404, and a customer line compartment 1406. The three portions of the enclosure are mounted to, for example, a wall, pole, or any other convenient location via a mounting plate 1408.

The electronics case houses the PCB containing the various electronic components used in D/A and A/D conversion. The telephone company equipment compartment contains one or more terminal blocks connected to a drop wire 1410 containing one or more DSL's (Digital Subscriber Lines). The customer line compartment houses one or more customer blocks for connection of subscriber equipment lines 1412.

The electronics case is preferably a modular plug-in unit which lifts directly off of and away from the lower portions of the enclosure, as indicated by the arrow 1414. A door over the customer line enclosure is hinged to drop down in the direction of arrow 1416 and then out in the direction of arrow 1418. A door over the telephone company equipment enclosure 1404 is similarly hinged. A skirt 1420 extends outward and downward from the electronics case and over the telephone company equipment compartment and the customer line compartment so as to prevent the influx of rainfall and the like in one embodiment. In a preferred embodiment, the entire case is sized to fit over the doors, rendering the skirt unnecessary. Downward movement of the doors to the two compartments 1404 and 1406 allows overhang of the skirt 1420 while also allowing access to the two compartments without removal of the case 1402.

Fig. 2 illustrates the enclosure in greater detail with the case 1402 lifted from its base and with the two compartment doors open. The case 1402 is shown partially cut away. As shown, the case 1402 encloses PCB 1422 which contains various components along with their interconnections. Interconnections to the terminal blocks in the telephone company compartment 1404 and customer compartment 1406 are made via a multiple conductor plug 1424 and socket 1426 of the type well known to those of skill in the art.

In one preferred embodiment, the PCB is mechanically connected to the case 1402 and lifts away from the connector 1426 when the case is lifted away therefrom. In most preferred embodiments, the multiple conductor socket is at least partially filled with an environmental sealant. A wide variety of sealants are available for this use, including, for example, hot melts, but preferably including epoxies and dielectric gels such as urethanes, silicones, and styrene-ethylenebutylene-styrenes, including those disclosed in U.S. Patent Nos. 4,634,207, 4,600,261, 4,643,924, 4,865,905, 4,662,692, and 4,942,270. Preferred gels used in conjunction with the present invention include those having a cone penetration value of 50 to 350x10⁻¹ mm, preferably 100 to 300x10⁻¹ mm, and most preferably 100 to 250x10⁻¹ mm. Preferred gels also have an ultimate elongation of at least 50%, preferably at least 100%, and most preferably at least 200%. Such gels may be utilized by forming the gel directly in the socket or in other forms such as with tape such as those sold under the name GelTek™ by Raychem Corporation.

In preferred embodiments, the bottom portion of the case 1402 is sealed with a plate 1458, as shown in the cut-away portion of Fig. 2. Above the plate 1458, the case is further sealed with hot melt 1460. Preferably, the case is filled with between 1/64" and 1/8" hot melt or mastic, preferably having good adhesion to metal properties at low temperatures (e.g., 0°C) and not becoming brittle at low temperatures. Hot melt suitable for this purpose is preferably type number S1149 made by Raychem Corporation. In preferred embodiments the bottom of the case is sealed with hot melt although gels such as those described in the above incorporated patents may be used in some embodiements.

The door of the telephone company compartment 1428 is mounted to a frame 1430 with drop hinges 1432. Drop hinges allow the door to move both upward and downward, as well as allowing the door to swing open and shut. The door 1438 includes a lip 1434 which extends under a customer equipment door 1436 when the doors are in the closed position. This prevents encroachment of water from rain, as well as other environmental encroachments.

Door 1428 is provided with a protected fastener 1438 which engages the frame 1430 at a mounting point 1440. The protected fastener is designed to limit customer access to the telephone company compartment 1404. Protected fasteners that will find use in conjunction with the invention include one-way screws, twisted wires with seals which are destroyed when the door 1428 is opened, key locks, screws with heads accessible only with specialized tools, and the like. By contrast, customer compartment door 1436 is fastened to the frame 1430 with a conventional and readily utilized fastener 1444, such as a conventional screw, bolt, wing nut, friction fitting, or the like. Accordingly, a customer is provided ready access to compartment 1406, while only the telephone company has ready access to compartment 1404.

In some embodiments case 1402 is held to the frame 1430 by only the socket 1426, although in some embodiments one or more bolts or other fasteners 1446 extend through the frame and into the case. As shown, one of the bolts is connected to the frame in the telephone company compartment 1404 and, accordingly, removal of the case is limited to only those having access to the compartment 1404.

Inside the telephone company compartment 1404, terminal blocks 1448 are mounted to frame 1430. Terminal block 1448 serves as an interface between socket 1426 and a twisted pair wire entering the customer facility. According to one preferred embodiment, the terminal block 1448 is a Raychem DTerminator™, Protected DTerminator™, or the like.

Inside the customer compartment 1406 a customer terminal block 1450 is mounted to frame 1430. Customer terminal block 1450 preferably includes both screwed terminal connections 1452 and modular, plug-in connections 1454. Customer terminal block 1450 serves as an interface between socket 1426 and wires leading to subscriber equipment in the customer's facility. In most preferred embodiments, both of terminal blocks 1448 and 1450 are protected with terminal block caps filled with a gel such as the gels used in the socket 1426.

In the particular embodiment shown in Fig. 2, the modular plug in connections 1454 such as RJ11 connections include a male and female side. In normal operation, the male and female portions are connected and telephone signals to the subscriber equipment are transmitted over two or more wire conductors therein. When it is desirable to perform maintenance or check the subscriber equipment at the RT, the male side is disconnected and the test equipment, such as a phone used for testing, is plugged into the female side of the plug. Upon completion of the testing activities, the male plug in the RT is reinserted into the female side, reestablishing a connection with the subscribers equipment.

The enclosure provides a customer ready access to portions of the RT which require customer service. At the same time, the enclosure provides reliable environmental protection to the electronics of the RT, as well as the interfaces to the DSL and subscriber lines. The RT electronics are compartmentalized in the case 1402 such that when a failure of the RT electronics is detected, the entire case is simply removed and replaced with a new unit. A switch 405 detects opening of the telephone company compartment and reports such conditions via the test system.

The case, the customer compartment and/or the telephone compartment may be provided with additional environmental sealing using, for example, the gels mentioned in conjunction with the socket 1426.

For example, according to one embodiment a strip of environmental sealant (a section of which is illustrated by reference numeral 1462) is provided around the edges of the frame where the frame meets the doors 1428 and 1436. According to further embodiments, a strip of environmental sealant is provided along the top perimeter of the frame where the frame will meet the case (as illustrated by the section of sealant 1464). Sealant 1466 may optionally be provided in the case 1402 against the PCB 1422 to provide shock resistance and corrosion resistance for the components therein.

In normal operation, the enclosure is utilized in the configuration shown in Fig. 1. If the subscriber needs access to the customer compartment, the fastener 1444 is disengaged, the door is dropped to the lower limits of the hinges, and the door is swung open. The subscriber removes terminal covers (if any) from the terminal block and performs any required operations to the customer compartment. Access to the telephone company compartment is restricted due to the fastener 1438. Similarly, removal of the case 1402 and attendant electronics is restricted because the subscriber cannot access the fastener 1446 in the compartment 1404.

If the telephone company requires access to the terminal blocks 1448, the restricted fastener 1438 is released, the door is dropped to the bottom limits of its hinges (to clear the skirt 1420) and the door is swung open. If a failure of the RT electronics is detected by the test system, the case is released from the frame 1430 by releasing the fasteners 1446. According to preferred embodiments, rather than attempting service of any individual electronic component of the RT the entire case, including the enclosed electronics and gel sealant, is removed from the frame and replaced with a new case and electronics. According to alternative embodiments, the case is sealed to the frame with a gasket or seal, and lifts away from the frame without the internal electronics. In such embodiments the gels described in the above-incorporated patents are used for sealing and are placed in a trough which is engaged by the bottom of the case. The RT PCB or any particular component thereon is then appropriately replaced or serviced.

In preferred embodiments, each of the internal electronics and interconnections in the customer accessible compartment and telephone company accessible compartment are sealed individually, rendering sealing of the doors unnecessary. The frame is preferably self draining to weep holes or the like, preventing accumulation of moisture in the enclosure.

The enclosure and its various components may be made from any one of a wide variety of materials. Preferred among such materials are sheet metal, plastic, and the like. 3

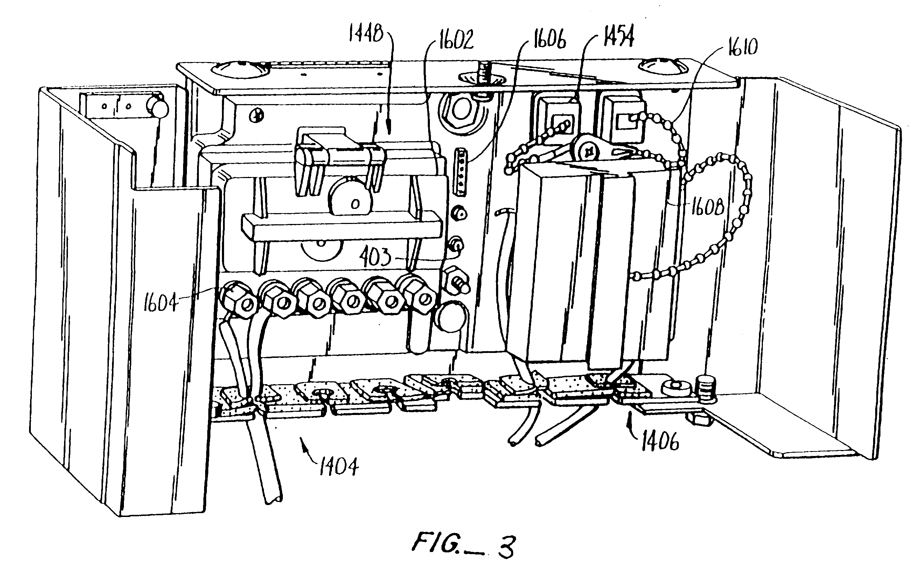

Fig. 3 illustrates one embodiment of the bottom portion of the RT enclosure in greater detail. As shown the telephone company compartment encloses terminal block 1448. The terminal block 1448 is preferably formed with an upper portion 1602 and a lower portion 1604. The upper portion is shown in Fig. 20 with a cover thereon which encloses one or more of the above-described gels. The lower portion 1604 provides a connection to the drop wires.

The telephone company compartment further includes a maintenance interface 1606 such as a five-pin plug, as well as indicator lights 403.

In the customer compartment 1406, terminal block 1452 is shown with a gel-filled cover 1608 thereon. In the preferred embodiment shown in Fig. 3, wires need not extend from the male side of the RJ11 connector, using the "dummy" male connector described below. Optionally, a grasping means, such as a stiff plastic string 1610, is connected to the male side of the "dummy" RJ11 test connection, allowing it to be easily removed from the female side.

In the enclosure of the invention said components case may be secured to said frame with at least one fastener in said limited access region.

In this enclosure of the invention said at least one component for processing signals may comprise a circuit board for conversion of digital signals from a twisted pair to analog signals for use in subscriber telephone equipment.

The components case is preferably secured to said components, said components removed from said socket upon removal of said case.

The first and second covers may comprise hinged doors.

The components case may comprise a skirt extending downward over said doors, said doors hinged to move downward away from said skirt upon release of said fasteners.

The enclosure may further comprise a seal for limiting ingress of environmental contaminations to said case.

The components case may further comprise an environmental sealing material over at least one opening thereof.

The environmental sealing material may comprise a hot melt, such as that known by the Raychem designation S1149.

The enclosure may further comprise a gel seal in said socket and plug assembly.

The gel may be selected from the group of urethanes, silicones, and styrene-ethylenebutylene-styrenes.

The gel may have a cone penetration value of between about 50 and 350x10⁻¹mm, particularly between about 100 to 300x10⁻¹ mm, especially between about 100 to 250x10⁻¹mm, and an ultimate elongation of at least 50% particulars at least 100%, especially at least 200%.

The enclosure may further comprise a switch for detection of an open condition of said first cover.

## Claims

1. An enclosure for telecommunications equipment, comprising:
a) a frame (1430), said frame defining a telephone line region (1404,1406) comprising telephone line connections; and
b) a sealed components case (1402), said sealed components case enclosing at least one electronics component (1422) for processing signals from and to said telephone line connections;
characterised in that said components case is attachable to said frame with a socket and plug assembly (1424, 1426), further comprising a gel seal in said socket and plug assembly.

2. An enclosure according to claim 1 wherein said gel has an ultimate elongation of at least about 50% and a cone penetration value of between about 100 to 350 x 10⁻¹mm.

3. An enclosure according to any preceding claim, wherein said at least one component for processing signals comprises a circuit board (1422) for conversion of digital signals from a twisted pair to analog signals for use in subscriber telephone equipment.

4. An enclosure according to any preceding claim, further comprising a cover (1430, 1428, 1436) over said telephone line region (1404, 1406), said cover permitting access to said telephone line region upon release of a fastener (1438, 1444).

5. An enclosure according to claim 4, wherein said cover comprises a hinged door (1428, 1436), and wherein said components case (1402) comprises a skirt (1420) extending downward over said door, said door hinged to move downward away from said skirt upon release of said fastener (1438, 1444).

6. An enclosure according to claim 2 or any preceding claim dependant thereon, wherein said gel is selected from the group of urethanes, silicones, and styrene-ethylene-butylene-styrenes.

7. An enclosure according to claim 6, wherein said gel has a cone penetration value of between about 100 to 350 x 10⁻¹mm and an ultimate elongation of at least 100%.

8. An enclosure according to any preceding claim, wherein said sealed components case (1402) comprises a sealed electronics board case, said electronics board case enclosing at least one electronics component (1422) for inputting multiplexed digital signals, said electronics board case electrically connectable to said frame with said socket and plug assembly.

## Patentansprüche

1. Umhüllung für Telekommunikations-Ausrüstungen, die folgendes aufweist:
a) einen Rahmen (1430), wobei der Rahmen einen Telefonleitungsbereich (1404, 1406) bildet, der Telefonleitungsverbindungen aufweist; und
b) ein abgedichtetes Gehäuse (1402) für Komponenten, wobei das abgedichtete Gehäuse für Komponenten mindestens eine elektronische Komponente (1422) zum Verarbeiten von Signalen von den und zu den Telefonleitungsverbindungen umschließt,
dadurch gekennzeichnet,
daß das Gehäuse für die Komponenten an dem Rahmen mit einer Anordnung (1424, 1426) mit Stecker und Fassung anbringbar ist und außerdem eine Gelabdichtung in der Anordnung mit Stecker und Fassung aufweist.

2. Umhüllung nach Anspruch 1,
wobei das Gel eine Bruchdehnung von mindestens etwa 50 % und einen Konuspenetrationswert von etwa 100 bis 350 x 10⁻¹ mm besitzt.

3. Umhüllung nach einem der vorhergehenden Ansprüche,
wobei die zumindest eine Komponente zum Verarbeiten von Signalen eine Leiterplatte (1422) zur Umwandlung von digitalen Signalen aus einem verdrillten Paar in analoge Signale zur Verwendung in Teilnehmer-Telefonausrüstungen aufweist.

4. Umhüllung nach einem der vorhergehenden Ansprüche,
die ferner eine Abdeckung (1430, 1428, 1436) über dem Telefonleitungsbereich (1404, 1406) aufweist, wobei die Abdeckung beim Lösen einer Befestigung (1438, 1444) einen Zugang zu dem Telefonleitungsbereich ermöglicht.

5. Umhüllung nach Anspruch 4,
wobei die Abdeckung eine angelenkte Tür (1428, 1436) aufweist und wobei das Gehäuse (1402) eine Schürze (1420) aufweist, die sich nach unten über die Tür erstreckt, wobei die Tür so angelenkt ist, daß sie sich beim Lösen der Befestigung (1438, 1444) nach unten von der Schürze weg bewegt.

6. Umhüllung nach Anspruch 2 oder einem der vorherigen Ansprüche, die davon abhängig sind,
wobei das Gel aus der Gruppe von Urethanen, Silikonen und Styrol-Ehtylen-Butylen-Styrolen gewählt ist.

7. Umhüllung nach Anspruch 6,
wobei das Gel einen Konuspenetrationswert von etwa 100 bis 350 x 10⁻¹ mm und eine Bruchdehnung von mindestens 100 % besitzt.

8. Umhüllung nach einem der vorhergehenden Ansprüche,
wobei das abgedichtete Gehäuse (1402) für Komponenten ein abgedichtetes Gehäuse für Elektronikplatten aufweist, wobei das Gehäuse für Elektronikplatten mindestens eine - elektronische Komponente (1422) zur Eingabe von digitalen Multiplexsignalen umschließt, wobei das Gehäuse für Elektronikplatten mit Hilfe der Anordnung mit Stecker und Fassung mit dem Rahmen elektrisch verbunden werden kann.

## Revendications

1. Enceinte pour matériel de télécommunications, comportant :
a) un bâti (1430), ledit bâti définissant une région (1404, 1406) de lignes téléphoniques comportant des connexions de lignes téléphoniques ; et
b) un boîtier étanche (1402) à composants, ledit boîtier étanche à composants renfermant au moins un composant électronique (1422) pour le traitement de signaux allant auxdites, et venant desdites, connexions de lignes téléphoniques ;
caractérisée en ce que ledit boîtier à composants peut être relié audit bâti à l'aide d'un ensemble à support de connexion et fiche (1424, 1426), comportant en outre un gel d'étanchéité dans ledit ensemble à support de connexion et fiche.

2. Enceinte selon la revendication 1, dans laquelle ledit gel possède un allongement à la rupture d'au moins environ 50 % et une valeur de pénétration de cône comprise entre environ 100 et 350x10⁻¹ mm.

3. Enceinte selon l'une quelconque des revendications précédentes, dans laquelle ledit, au moins un composant pour le traitement de signaux, comprend une plaquette (1422) à circuit destinée à convertir des signaux numériques provenant d'une paire torsadée en signaux analogiques destinés à être utilisés dans du matériel téléphonique d'un abonné.

4. Enceinte selon l'une quelconque des revendications précédentes, comportant en outre un couvercle (1430, 1428, 1436) sur ladite région (1404, 1406) de lignes téléphoniques, ledit couvercle permettant d'accéder à ladite région de lignes téléphoniques à la suite de l'enlèvement d'un organe de fixation (1438, 1444).

5. Enceinte selon la revendication 4, dans laquelle ledit couvercle comporte une porte (1428, 1436) montée sur charnière, et dans laquelle ledit boîtier (1402) à composants comporte une jupe (1420) s'étendant vers le bas sur ladite porte, ladite porte montée sur charnière pouvant descendre et s'éloigner de ladite jupe lors de l'enlèvement dudit organe de fixation (1438, 1444).

6. Enceinte selon la revendication 2 ou l'une quelconque des revendications précédentes qui en dépendent, dans laquelle ledit gel est choisi dans le groupe constitué d'uréthannes, de silicones et de styrène-éthylène-butylène-styrènes.

7. Enceinte selon la revendication 6, dans laquelle ledit gel possède une valeur de pénétration de cône comprise entre environ 100 et 350x10⁻¹ mm et un allongement à la rupture d'au moins 100 %.

8. Enceinte selon l'une quelconque des revendications précédentes, dans laquelle ledit boîtier étanche (1402) à composants comprend un boîtier étanche à plaquette à circuit électronique, ledit boîtier à plaquette à circuit électronique renfermant au moins un composant électronique (1422) pour l'entrée de signaux numériques multiplexés, ledit boîtier à plaquette à circuit électronique pouvant être connecté électriquement audit bâti à l'aide dudit ensemble à support de connexion et fiche.
